# NEUE EUROPÄISCHE PATENTSCHRIFT

(11) **EP 0 382 331 B2**
(45) Veröffentlichungstag und Bekanntmachung des Hinweises auf die Entscheidung über den Einspruch: **02.01.2003**
(45) Hinweis auf die Patenterteilung: 14.12.1994
(21) Anmeldenummer: 90250041.2
(22) Anmeldetag: 08.02.1990
(51) Int. Cl.: B01D 46/52, B01D 46/10

(54) **Filtereinsatz**
Filter cartridge
Cartouche filtrante

(30) Priorität: 08.02.1989 DE 3903730; 19.05.1989 DE 3916838
(43) Veröffentlichungstag der Anmeldung: 16.08.1990
(73) Patentinhaber: Carl Freudenberg KG, 69469 Weinheim (DE)
(72) Erfinder: Carl Freudenberg KG, 69469 Weinheim (DE)
(74) Vertreter: Sobisch, Peter, Dipl.-Ing.

(56) Entgegenhaltungen:
- DE-A- 2 138 412
- DE-A- 2 813 356
- DE-B- 2 835 181
- FR-A- 2 427 123
- US-A- 3 392 843
- US-A- 3 531 920

## Beschreibung

Die Erfindung befaßt sich mit einem Filtereinsatz in quaderförmiger Ausbildung, bestehend aus einer Vielzahl von in zick-zack-förmiger Faltung angeordneten Faltenwänden für ein in Richtung von einem Kantenbereich in der Zick-Zack-Faltung in Richtung auf den gegenüberliegenden Kantenbereich der Faltung durch den Einsatz hindurchtretendes zu filterndes Medium, bestehend aus einem für das zu filternde Medium durchlässigen Material mit aus jeder Faltenwand in Richtung auf eine benachbarte Faltenwand vortretenden, durch Prägung erzeugten inselförmigen Vorsprüngen, die sich in Bewegungsrichtung des Mediums erstrecken und eine ihre Breite übersteigende Länge aufweisen, wobei die Vorsprünge einander benachbarter Faltenwände zur Abstandssicherung und Aussteifung aneinander anliegen und die aneinander anliegenden Vorsprünge zweier über eine Faltenkante verbundene Faltenwände in Richtung auf die gegenüberliegende Faltenkante in ihrer Höhe zunehmen und somit zwischen diesen Faltenwänden einen in Bewegungsrichtung des Mediums abnehmenden bzw. nach Durchtritt des Mediums durch die betreffende Faltenwand anwachsenden Abstand festlegen.

Ein derartiger Filtereinsatz ist aus US-A-3,531.920 bekannt. Bei diesem Filtereinsatz wird das Filtermaterial durch Walzen mit profilierter Oberfläche mit Prägungen versehen und anschließend derart gefaltet, daß die eingeprägten Vorsprünge benachbarter Wandungen des Filtermaterial aufeinander zu liegen kommen. Die besondere Gestalt der eingeprägten Vorsprünge und ihre durch die Faltung vorgegebene Lage aufeinander sorgen dafür, daß die Faltenwände eine echte Zick-Zack-Konfiguration aufweisen, d.h. daß zwischen den Faltenwänden ein in Bewegungsrichtung des zu filternden Mediums zum Filtermaterial hin abnehmender und nach Durchtritt des zu filternden Mediums durch das Filtermaterial wieder anwachsender Abstand festgelegt ist.

Die mechanische Stabilität und Handhabbarkeit dieses Filtereinsatz ist noch verbesserungswürdig.

Ein aus der US-A-33 92 843 bekannter Filtereinsatz hat quaderförmige Gestalt und besteht aus einem Filterelement, das im Zick-Zack gefaltet ist. An den Faltenwänden, die durch Zick-Zack-Faltung gebildet werden, sind beidseitig fortlaufende, bandförmige Abstandshalter angeordnet. Die bandförmigen Abstandshalter weisen einen rechteckigen Querschnitt auf und liegen an den einander zugewandten Seiten aneinander an. Dadurch werden die Faltenwände in einem vorbestimmten Abstand gehalten. Die Faltenwände sind zueinander parallel angeordnet und durch die Faltenwände tritt ein zu filterndes Medium in Richtung von einem Kantenbereich der Zick-Zack-Faltung in Richtung auf den gegenüberliegenden Kantenbereich der Faltung durch den Einsatz hindurch.

Nachteilig dabei ist, daß durch die Bandbreite die zum Filtervorgang nutzbare Filteroberfläche verkleinert wird. Dadurch reduziert sich die Lebensdauer des Filtereinsatzes und der Abscheidegrad. Ebenso ist die große Menge an aufzubringendem, aushärtbarem Kunstoffband auf das Filterelement unwirtschaftlich, da zur Polimerisation des Kunststoffbandes ein erheblicher Energie- und Zeitaufwand notwendig ist. Daraus ergeben sich zudem geringere Produktionsgeschwindigkeiten.

Durch die Sandwichanordnung, Faltenwand-Abstandshalterband-Abstandhaiterband-Faltenwand. summieren sich die Toleranzen durch die vier aufeinanderliegenden Wandungen. Viskositätsunterschiede im Material der Abstandshalter führen darüber hinaus zu Schwankungen des Faltenabstands. Geometrisch exakte, gleichartige Einzelfalten sind deshalb kaum herzustellen. woraus eine geometrische Inhomogenität des Filtereinsatzes resultiert. Dadurch kommt es zu Druckdifferenzunterschieden, kürzerer Lebensdauer und zu einem geringeren Abscheidegrad des Filtereinsatzes sowie schädlichen Unterschieden der Geschwindigkeitsverteilungen des zu filternden Mediums.

Desweiteren können die Faltenwände über einen Falz, dessen Durchmesser das Maß des Abstands zweier benachbarter, gegenüberliegener Faltenände aufweist, nur parallel angeordnet werden, da das Band als Abstandshalter dient und somit keine andere Lösung zuläßt. Ein kontinuierlicher Durchsatz des zu filternden Mediums durch den Filtereinsatz ist deshalb nicht möglich; das Filter funktioniert anders als eines mit dem gattungsgemäßen Filtereinsatz.

Eine zur soeben diskutierten Druckschrift ähnliche Anordnung ist in DE-B-28 35 181 beschrieben, wobei auch hier das Filtermaterial im fertigen Filtereinsatz keine echte Zick-Zack-Konfiguration, sondern einander parallele Lagen aufweist. Auch dieser Filtereinsatz ist damit keiner der gattungsgemäßen Art. Im übrigen weist er ebenfalls die Nachteile des Filtereinsatzes nach US-A-33 92 843 auf.

Aus DE-A-11 21 438 ist ein Filtereinsatz bekannt, der aus einem der Länge nach zick-zack-förmig gefalteten Papierstreifen besteht. Dort ist eine Ausführungsform beschrieben, welche sich auf ebene, in einem Rahmen eingespannte bzw. in einem solchen befestigte Filtereinsätze bezieht. Bei diesen bekannten Filtereinsätzen sind in Längsrichtung des Filterpapierstreifens schmale Längswülste aufgeklebt. Dort wird aber vorgesehen, daß die bisher vorhandenen - wie aus US-A-3,531,290 bekannt - Vorsprünge, welche als Abstandshalter dienen, durch die in Längsrichtung des Filterpapierstreifens verlaufende und aufgeklebte schmale Längswülste ersetzt werden. Somit dienen diese schmalen Längswülste als Ersatz für bisher aus den Flächen der Falten geprägte Vorsprünge.

Der Erfindung liegt die Aufgabe zugrunde, einen Filtereinsatz der eingangs genannten Gattung bereitzustellen, der bei einfacher Konstruktion eine hohe Stabilität und einfache Handhabung der Anordnung bei Erhaltung einer möglichst großen Filterdurchsatzfläche gewährleistet.

Zur Lösung dieser Aufgabe wird nach der Erfindung ein Filtereinsatz in quaderförmiger Ausbildung, bestehend aus einer Vielzahl von in zick-zack-förmiger Faltung angeordneten Faltenwänden für ein in Richtung von einem Kantenbereich in der Zick-Zack-Faltung in Richtung auf den gegenüberliegenden Kantenbereich der Faltung durch den Einsatz hindurchtretendes zu filterndes Medium, bestehend aus einem für das zu filternde Medium durchlässigen Material mit aus jeder Faltenwand in Richtung auf eine benachbarte Faltenwand vortretenden, durch Prägung erzeugten inselförmigen Vorsprüngen, die sich in Bewegungsrichtung des Mediums erstrecken und eine ihre Breite übersteigende Länge aufweisen, wobei die Vorsprünge einander benachbarter Faltenwände zur Abstandssicherung und Aussteifung aneinander anliegen und die aneinander anliegenden Vorsprünge zweier über eine Faltenkante verbundene Faltenwände in Richtung auf die gegenüberliegende Faltenkante in ihrer Höhe zunehmen und somit zwischen diesen Faltenwänden einen in Bewegungsrichtung des Mediums abnehmenden bzw. nach Durchtritt des Mediums durch die betreffende Faltenwand anwachsenden Abstand festlegen, bereitgestellt, welcher sich durch folgendes auszeichnet: Mindestens einen den Filtereinsatz durch Verbindung jeweils benachbarter Faltenkanten stabilisierenden Faden oder Streifen der auf Faltenkanten anliegt, im wesentlichen senkrecht zu den Faltenkanten gerichtet ist und die Faltenkanten auf dem zu den Faltenkanten senkrechten Weg miteinander verbindet, wobei der Faden jeweils an der Oberfläche anliegend ausgehend von der Faltenkante auf der einen Faltenwand bis zu einem Vorsprung dieser Faltenwand, der an einem Vorsprung der gegenüberliegenden Faltenwandseite anliegt, verläuft und auf der in Richtung der Faltenkante weisenden Fläche der Vorsprünge bis zur benachbarten Faltenwand und auf dieser zur nächsten Faltenkante verläuft, und der den Filtereinsatz stabilisierende Faden derart angeordnet ist, daß er endlos über die Faltenkanten und die den Filtereinsatz nach außen begrenzenden Faltenwände verläuft und dabei insbesondere im Bereich der den Filtereinsatz nach außen begrenzenden Faltenwände als Führung zum Einschieben des Filtereinsatzes in ein Filtergehäuse ausgebildet ist.

Nach der Erfindung wird somit ein Filtereinsatz der gattungsgemäßen Art mit zumindest einem Faden derart ausgestattet, daß der Faden im wesentlichen senkrecht zu den Faltenkanten gerichtet und auf Vorsprüngen anliegend mit einem schlangenförmigen Verlauf die Faltenkanten miteinander verbindet und daß der Faden endlos über die Faltenkanten und die den Filtereinsatz nach außen begrenzenden Faltenwände verläuft und dabei insbesondere im Bereich der den Filtereinsatz nach außen begrenzenden Faltenwände als Führung zum Einschieben des Filtereinsatzes in ein Filtergehäuse ausgebildet ist. Bei dem erfindungsgemäßen Filtereinsatz werden somit die Funktion, gemäß der die Falten in einer vorbestimmten, zick-zackförmigen Konfiguration erhalten werden, und die Funktion der Stabilisierung des Filtereinsatzes auf gesonderte, konstruktive Elemente des Filtereinsatzes verteilt. Mit dem endlos verlaufenden Faden wird insbesondere auch die Filterdurchsatzfläche möglichst wenig verkleinert. Somit kann bei insgesamt laminarer Strömung die gesamte Fläche des Filtermaterials gleichmäßig zum bestimmungsgemäßen Zweck genutzt werden, und entlang des Mediumströmungsweges treten keine Druckschwankungen auf, welche den Strömungswiderstand in unerwünschter Weise vergrößern könnten. Durch den vorbestimmten Verlegungsverlauf des Fadens wird die Gesamtstabilität des Filtereinsatzes verbessert. Auch lassen sich die Produktionskosten aufgrund höherer Produktionsgeschwindigkeiten und Materialkosten hierbei reduzieren. Auch gestattet der Verlauf des Fadens eine bequeme Handhabung des Filtereinsatzes beim Einschieben desselben in ein Filtergehäuse.

Weitere vorteilhafte Ausgestaltungen des Filtereinsatzes sind in den Ansprüchen 2 bis 10 wiedergegeben.

Als fertigungstechnisch vorteilhaft hat es sich erwiesen, einen Faden zu verwenden, der aus einem schäumenden, klebenden und sich verfestigenden Kunststoff besteht, so daß sich die Materialkosten senken lassen und eine vollautomatische Fertigung ermöglicht wird.

In einer weiteren bevorzugten Ausführung des Filtereinsatzes weist das Filtermaterial mindestens einen Anteil von thermoplastischen Fasern auf, so daß gezielt eine bleibende Verformung und Bereiche höherere Steifigkeit durch Wärmebehandlung, auch in Form einer Verschweißung des Filtermaterials, innerhalb der Filterschicht herstellbar sind. Dabei werden trotz der durch das Verschweißen enstehenden erhöhten Materialdichte die Filtereigenschaften als solche nicht bzw in den verformten Bereichen nur geringfügig beeinträchtigt. Die Filtereigenschaften sind aber in jedem Fall weitaus besser als bei herkömmlichen mit Binder versehenen Filtermaterialien. Durch die Möglichkeit, einzelne Filterlagen zu verbinden und somit ein Lösen der einzelnen Lagen voneinander zu verhindern, aber auch aufgrund der verbesserten hohen örtlichen Quer- bzw. Längssteifigkeit sind die erfindungsgemäß behandelten Filtermedien faltbar und für die übliche Filteranwendungen geeignet.

Die aus Kunststoffasermaterialien bestehenden Filtermedien weisen in vorteilhafter Weise einen höheren Abscheidegrad und geringere Druckdifferenzen gegenüber herkömmlichen Glasfasermaterialien auf. Daraus resultiert eine geringere notwendige Förderleistung und eine höhere Lebensdauer der Filtereinsätze. Hinzu kommt auch noch, daß die entsprechenden Antriebsmittel mit abnehmender Leistung weniger Geräusche verursachen. Vorteilhaft ist weiterhin, daß durch das Einprägen der Vorsprünge in das Filtermedium deren Wandungen trotz geschwächter Wandstärke ein gute Stabilität aufweisen. Damit kann trotz einer verringerten Zahl von Vorsprüngen die Filterfläche noch vergrößert werden. Der Strömungswiderstand wird dabei herabgesetzt und es sind homogene Strömungsverhältnisse gewährleistet. Daraus resultieren sowohl eine geringere Absaugleistung als auch eine reduzierte Geräuschentwicklung der Filteranlage sowie eine erhöhte Lebensdauer des Filtereinsatzes.

Durch den thermoplastischen, bereichsweise verschweißten Faseranteil wird in vorteilhafter Weise die Stabilität und die Aussteifung des Filtereinsatzes an vorbestimmten Bereichen, insbesondere an Vorsprüngen, entsprechenden Übergangsbereichen und Faltenkanten, erhöht. Die dadurch erzielbare verringerte Anzahl von Vorsprüngen erweist sich als zusätzlich vorteilhaft, da ein günstiges Verhältnis der wirksamen Filterfläche zur Gesamtoberfläche der Faltenwände erreicht wird. Die Filtereinsätze lassen sich somit auch als Einwegartikel erzeugen. welche kostengünstig herstellbar sind und eine lange Standzeit aufweisen. Die aus thermoplastischem Werkstoff bestehenden Filterwandungen brauchen desweiteren nicht mit festen Abstandshaltern oder Aussteifungen aus Fremdmaterial versehen zu werden.

Die Fasern sind im verschweißten Zustand ohne wesentliche Hohlräume miteinander verbunden. Das durchlässige Filtermedium ist mehrlagig ausgebildet, wobei einzelne Lagen bereichsweise miteinander verschweißt sind, so daß ein Ablösen der einzelnen Lagen verhindert wird. Weiterhin ist vorteilhaft, wenn das durchlässige Filtermedium Fasern, mindestens aber Faseranteile, aus Polypropylen, Cellulose, Polycarbonat, Polyamid, Teflon und/oder Polyester enthält. Durch diesen Aufbau ist ein ausreichend hoher thermoplastischer Werkstoffanteil innerhalb des Filtermediums vorhanden und die Filtereigenschaften können den Anforderungen angepaßt werden. Als günstig erweist es sich auch, wenn die nahtförmigen verschweißten Bereiche in Form eines Filmscharniers ausgebildet werden.

Die Erfindung wird nachstehend an Hand von bevorzugten Ausführungsformen unter Bezugnahme auf die beigefügte Zeichnung näher erläutert. Darin zeigt:
- Fig. 1a: eine perspektivische Ansicht eines Teils einer bevorzugten Ausführungsform eines Filtereinsatzes nach der Erfindung,
- Fig. 1b: eine Draufsicht auf die bevorzugte Ausführungsform,
- Fig. 2: einen Ausschnitt A als vergößerte Teildarstellung von Figur 1a,
- Fig. 3: eine perspektivische Ansicht eines Teils des Filtermaterials im ungefalteten Zustand, und
- Fig. 4: eine perspektivische Draufsicht einer bevorzugten Ausführungsform eines gefalteten Filtereinsatzes.

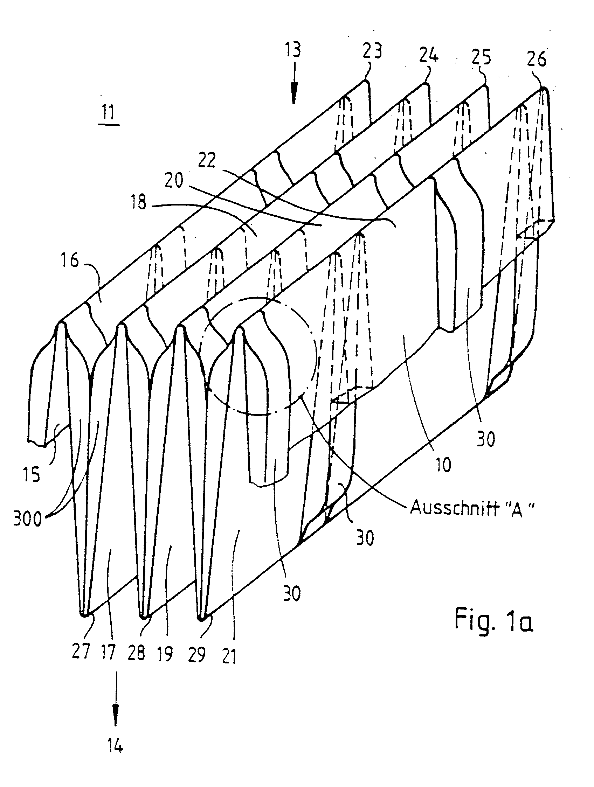

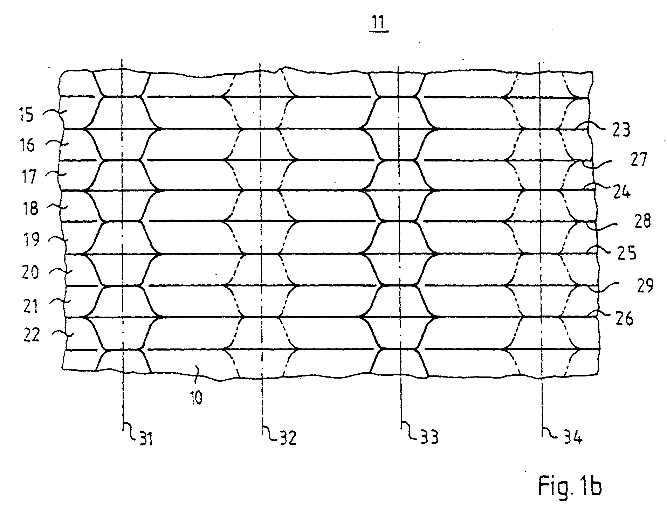

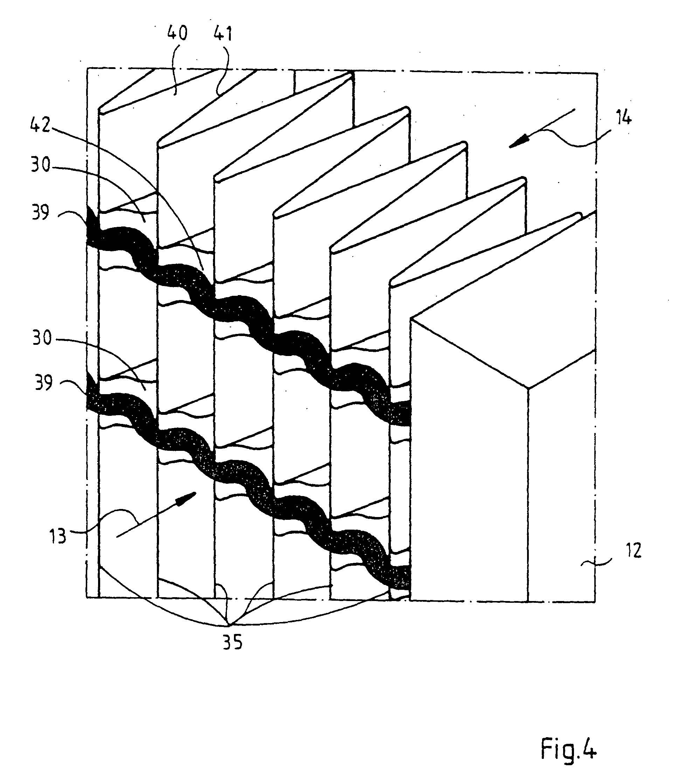

In den Figuren 1a und b und in Figur 4 ist jeweils ein Ausschnitt eines Filtermaterials 10, bestehend aus einem Filtervlies, dargestellt, das durch Zick-Zack-Faltung zu einem im wesentlichen quaderförmigen Filtereinsatz 11 geformt ist. Bei diesem Filtervlies handelt es sich insbesondere um ein Schwebstoffvlies. Grundsätzlich ist jedes Filtermaterial geeignet, das sich entsprechendend formen läßt.

Der quaderförmige Filtereinsatz 11 paßt in bekannter Weise in einen Rahmen 12, der den Filtereinsatz zusätzlich stabilisiert. Der Filtereinsatz kann - je nach Anwendungsfall - gegebenenfalls auch ohne Rahmen ausgebildet sein, wobei die Außenabmessungen an die für den Filtereinsatz vorgesehene Ausnehmung dem entsprechenden Aufnahmeteil angepaßt sind. Der Filtereinsatz wird von einer Eintrittsseite 13 durch das zu filternde Medium angeströmt, von wo das Strömungsmittel durch das Filtermaterial in Richtung einer gegenüberliegenden Austrittsseite 14 strömt, von der es über eine geeignete Abfuhrleitung abgezogen wird oder frei abströmt.

Das Filtermaterial 10, in Figur 1a und b, ist zick-zackförmig gefaltet, wobei eine Anzahl von Faltenwänden 15 bis 22 jeweils eine Falte bilden. Die Faltenwände 15 und 16 sind durch einen Falz 23 auf der Eintritteseite 13, die angeströmt wird, miteinander verbunden. Ebenso sind die Faltenwände 17 und 18 durch einen Falz 24, die Faltenwände 19 und 20 durch einen Falz 25 und die Faltenwände 21 und 22 durch einen Falz 26 miteinander verbunden; wohingegen die Faltenwände 16 und 17 durch einen Falz 27 auf der Seite 14 miteinander verbunden sind. Ebenso sind die Faltenwände 18 und 19 durch einen Falz 28 und die Faltenwände 20 und 21 durch einen Falz 29 auf der Austrittsseite 14 miteinander verbunden. Durch diese Faltung wird die Filtereinsatzoberfläche vergrößert und der Abscheidegrad des Filtereinsatzes 11 heraufgesetzt. Diese Verbesserung resultiert aus einer Optimierung der Geschwindigkeitsverteilung und Senkung der Druckdifferenz. Die Lebensdauer ist gegenüber herkömmlichen entsprechenden Filtern erhöht.

Die Faltenwände 15 bis 22 weisen materialeinheitliche Vorsprünge 30 auf, die durch Prägung des Filtermateriales (Schwebstoffiltervlieses) ausgebildet wurden. Die Vorsprünge 30 haben in Bewegungsrichtung des zu filternden Mediums eine konstante Breite. Dabei ist die Breite geringer als die Höhe der maximalen Erhebungen der Vorsprünge bezogen auf die Ebene der Faltenwand. Die Seitenwandungen 300 der Vorsprünge 30 erstrecken sich senkrecht zu den die Faltenwände 15 bis 22 miteinander verbindenden Falzen 23 bis 29. Dabei weisen die Vorsprünge 30, ausgehend von den Falzen 27 bis 29 in Richtung auf die Falze 23 bis 26, eine zunehmende Höhe bezogen auf die Ebene der Faltenwände 15 bis 22 auf.

Der Berührungsbereich ist in Form einer rechteckigen Berührungsfläche der Vorsprünge 30 ausgebildet. Dadurch erhöht sich die Stabilität des Filtereinsatzes. Durch die Prägung der Faltenwände 15 bis 22 hat sich die Oberfläche des Filterelements entsprechend vergrößert und der zusätzliche benötigte Werkstoff wurde aus der zu prägenden Faltenwand durch den Prägevorgang gezogen. Dadurch sind die Wandungen der Vorsprünge 30 entsprechend dünner ausgebildet. Der aufgetragene Kleber verfestigt gerade diesen Bereich zusätzlich, so daß die durch die Verformung eingetretene Materialschwächung beseitigt bzw. je nach Kleberauftrag überkompensiert ist.

Die Vorsprünge 30 benachbarter Faltenwände 15 bis 22 liegen zur Abstandssicherung und Aussteifung aneinander an. Dabei sind z.B. die aneinander anliegenden Vorsprünge 30 zweier über einen Falz 27 verbundenen Faltenwände 16 und 17 in Richtung auf den jeweils gegenüberliegenden Falz 23 und 24 in ihrer Höhe, bezogen auf die jeweilige Faltenwand 16 oder 17, zunehmend ausgebildet, so daß zwischen diesen Faltenwänden 16 und 17 ein in Bewegungsrichtung des Mediums abnehmender bzw. nach Durchtritt des Mediums durch die jeweilige Faltenwand 16 oder 17 anwachsender Abstand festliegt. Auf diese Weise ist sichergestellt, daß bei insgesamt laminarer Strömung die gesamte Fläche des Filtermaterials gleichmäßig ausgenutzt wird und entlang des Transportwegs. des Mediums keine Druckschwankungen auftreten, welche den Strömungswiderstand in unerwünschter Weise vergrößern.

Die Vorsprünge 30 sind entlang von Geraden 31 bis 34, die zueinader gleichen Abstand aufweisen, angeordnet. Dabei treten die Vorsprünge derart abwechselnd aus den Seiten 13 und 14 hervor, daß die Vorsprünge 30 auf den Geraden 31 und 33 aus der Eintrittsseite 13 hervortreten und die weiteren Vorsprünge 30, die entlang der Geraden 32 und 34 angeordnet sind, aus der Austrittsseite 14 hervortreten. Durch diese abwechselnde Anordnung der Vorsprünge 30 wird die Stabilität erhöht, da sowohl auf der Eintrittsseite 13 als auch auf der Austrittsseite 14 die Faltenwände in einem zueinander vorbestimmten Abstand gehalten werden.

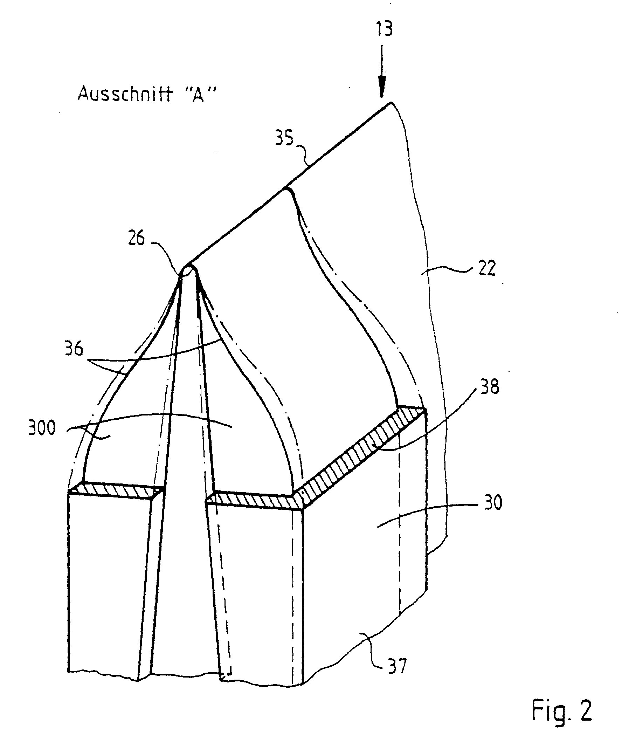

Der in Figur 2 dargestellte vergrößerte Ausschnitt A aus Figur 1 stellt einen Übergangsbereich 36 von der durch den Falz 26 gebildeten Faltenkante 35 zu dem aus der Faltenwand 22 hervortretenden Vorsprung 30 dar.

Der Bereich des Übergangs 36 erstreckt sich von demjenigen Ende des Vorsprungs 30, das den größten Abstand bezogen auf die Ebene der Faltenwand aufweist, in Richtung auf die Faltenkante 35 in die Ebene der Faltenwand 22. Dabei weist der Übergangsbereich 36 einen Bereich größerer Steigung auf, der zwischen zwei Bereichen geringerer Steigung angeordnet ist. Insbesondere gehen die Bereiche geringerer Steigung kontinuierlich in angrenzende ebene Bereiche über. Eine rechteckige Fläche 37 ist ein Teil der Berührfläche benachbarter aneinander anliegender Vorsprünge 30 der Faltenwände. Die Übergangsbereiche 36 sind strömungsgünstig ausgebildet, so daß der Strömungswiderstand, der u.a. durch die Vorsprünge hervorgerufen wird, sich verringert.

Über dem Vorsprung 30 und dem Übergangsbereich 36 ist eine den Vorsprung 30 und den Übergangsbereich 36 aussteifende. aushärtbare Klebebeschichtung 38 angeordnet, die am Ende des Vorsprungs 30 in Richtung auf die Faltenkante 35 aufgebrochen dargestellt ist, um die Ausbildung und Anordnung der einzelnen konstruktiven Elemente besser sichtbar zu machen. Die Klebebeschichtung 38 kann wahlweise auch als Tränkung 38 ausgebildet sein.

Die Klebebeschichtung 38 erstreckt sich auch auf die Seitenwandungen 300 der Vorsprünge 30 und des Übergangsbereichs 36. Die örtliche Dicke der Klebebeschichtung 38 nimmt dabei mit dem Abstand der Erhebung der Vorsprünge 30 bezogen auf die der Faltenwand 22 zu. Dadurch wird die durch die Prägung verursachte abnehmende Wanddicke der Vorsprünge 30 und damit auch die abnehmende Stabilität der Vorsprünge 30 durch die aushärtbare und die Vorsprünge aussteifende Klebebeschichtung 38 ausgeglichen. Die Vorsprünge erhalten durch die Klebebeschichtung 38 die für die beim Filtriervorgang auftretenden Kräfte benötigte Festigkeit und Stabilität.

Durch die aufgebrachte Klebebeschichtung 38 sind die benachbarten, aneinander angrenzenden Vorsprünge 30 miteinander verklebt. Dadurch wird der Filtereinsatz 11 stabilisiert und hält gleichzeitig seine Quaderform selbsttragend, ohne zusätzlichen Rahmen. Dies vereinfacht den Einbau der Filtereinsätze 11 in die bekannten Filtergehäuse 12 erheblich.

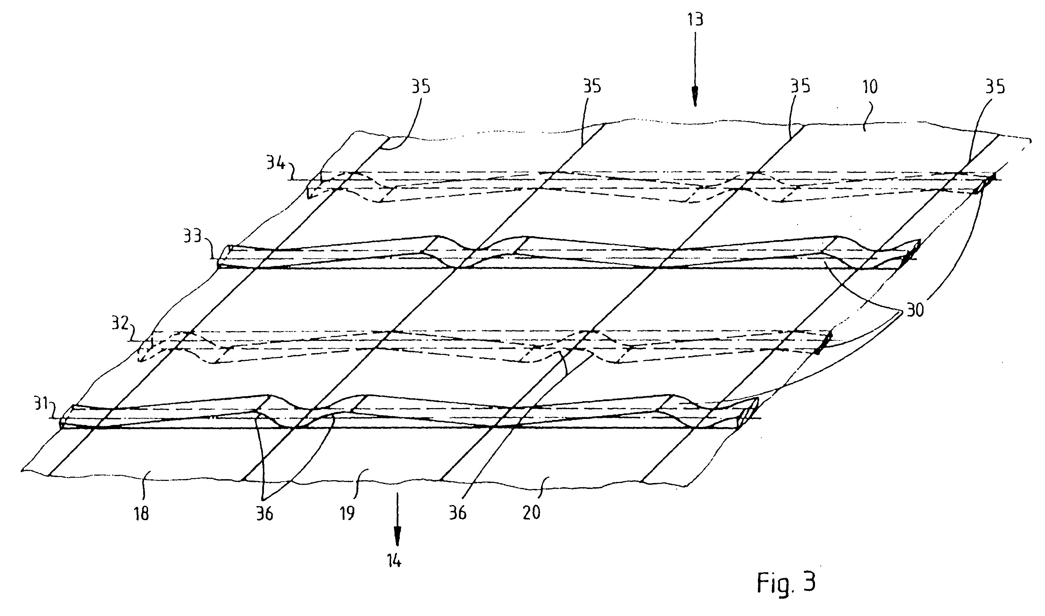

In Figur 3 ist in einer perspektivischen Ansicht ein Teil des Filtermaterials 10 in nicht gefaltetem Zustand dargestellt.

Es sind die abwechselnd aus der Eintrittsseite 13 und Austrittsseite 14 hervortretenden Vorsprünge 30 erkennbar. Die Vorsprünge 30 werden mittels zweier beidseitig des Filtermaterials 10 angeordneter Walzen, die hier nicht sichtbar sind, eingeprägt. Das Filtermaterial 10 läuft dabei folienartig durch die Prägewalzen. Es entstehen dadurch auf den Geraden 31 bis 34 fortlaufend eingeprägte Vorsprünge 30 mit den entsprechenden Übergangsbereichen 36 und den Faltenkanten 35. Anschließend läuft das Filterelement 10 wiederum durch beidseitig des Filtermaterials 10 angeordnete Walzen, die nicht sichtbar sind, die Hohlformen an ihren Walzwandungen aufweisen, die der Form der eingeprägten Vorsprünge 30 angepaßt sind. Die aushärtbare Klebebeschichtung 38 wird durch den Walzvorgang auf die Vorsprünge 30 und deren Seitenwandungen 300 aufgetragen. Durch die Walzenprägung der Vorsprünge 30 werden die Filterelemente 10 kostengünstig hergestellt und auch das Aufbringung der aushärtbaren Klebebeschichtung 38 erfolgt durch ein fertigungstechnisch vorteilhaftes Aufwalzen.

In Figur 4 ist ein Filtereinsatz 11 im Ausschnitt dargestellt, an dem zwei zueinander parallel verlaufende, den Filtereinsatz 11 stabilisierende Fäden 39 angeordnet sind. Die Fäden 39 verlaufen senkrecht zu den Faltenkanten 35 und verbinden die Faltenkanten 35 auf dem in der Draufsicht kürzesten Weg miteinander. Dabei liegen die Fäden jeweils an der Oberfläche des Filtereinsatzes 11 an. Ausgehend von der Faltenkante 35 auf der einen Faltenwand 40 verlaufen die Fäden 39 bis zu jeweils einem Vorsprung 30 dieser Faltenwand 40, der an jeweils einem Vorsprung 30 der gegenüberliegenden Faltenwand 41 anliegt. Die Fäden 39 verlaufen dann jeweils weiter auf der in Richtung der Faltenkante 35 weisenden Fläche 42 der Vorsprünge 30, bis zur benachbarten Faltenwand 41 und auf dieser bis zur nächsten Faltenkante. Die Fäden 39 sind endlos über die Faltenkanten 35 und die den Filtereinsatz 11 nach außen begrenzenden, hier nicht sichbaren, Faltenwände verlaufend angeordnet. Der Filtereinsatz 11 wird dadurch leicht handhabbar und erhält eine große Stabilität, so daß auch größere Ausführungen möglich sind.

Die Fäden bestehen aus einem homogenen schäumenden, klebenden und oder sich verfestigenden Kunststoff bzw. auch Streifenmaterial aus Karton und dergleichen. Somit sind die Fäden 39 an dem auf den Filtereinsatz 11 aufliegenden Bereichen mit dem Filtereinsatz 11 verklebt. Ein Verrutschen der Fäden 39 wird dadurch verhindert und die Stabilität des Filtereinsatzes 11 heraufgesetzt. Die den Filtereinsatz 11 stabilisierenden Fäden 39 sind im Bereich der den Filtereinsatz 11 nach außen begrenzenden, hier nicht sichtbaren, Faltenwände als Führung zum Einschieben des Filtereinsatzes in ein Filtergehäuse ausgebildet sein. Ein bequemes Auswechseln des Filtereinsatzes 11 ist dadurch möglich.

In einem weiteren, hier nicht dargestellten, Ausführungsbeispiel weist das Filtermaterial 10 aus thermoplastischen Werkstoff bestehende Fasern auf. Die thermoplastischen Fasern sind dabei in einem solchen Anteil enthalten, daß das Filtermaterial 10 mittels lokaler thermischer Behandlung bereichsweise verschweißt und somit in sich selbst verdichtet bzw. ausgesteift und mit gleichartigem Material verbunden ist.

Die Faltenkanten 23 bis 29 sind durch entsprechende Druck-und/oder Temperaturbedingungen verursachtes Verschweißen von Fasern erzeugt und weisen jeweils die Form eines Filmscharniers auf. Die Fasern sind dabei ohne wesentliche Hohlräume miteinander verbunden. Das durchlässige Filtermaterial 10 ist weiterhin mehrlagig ausgebildet. Die äußeren Lagen bestehen aus Polypropylen, also aus thermoplastischem Werkstoff. Durch diese Ausbildung können die Filtereigenschaften den Anforderungsbedingungen des Herstellungsprozesses sowie des Filterprozesses durch thermische Behandlung angepaßt werden. Dadurch werden sowohl die äußeren Lagen als auch das innere Filtermedium bereichsweise miteinander verschweißt, verdichtet und ausgesteift. Die zunächst durch den vorangehenden Prägevorgang geringfügig instabil gewordene Wandung der Vorsprünge 30 ist dabei durch die thermische Behandlung wieder ausgesteift worden.

## Patentansprüche

1. Filtereinsatz in quaderförmiger Ausbildung, bestehend aus einer Vielzahl von in zick-zack-förmiger Faltung angeordneten Faltenwänden für ein in Richtung von einem Kantenbereich in der Zick-Zack-Faltung in Richtung auf den gegenüberliegenden Kantenbereich der Faltung durch den Einsatz hindurchtretendes zu filterndes Medium, bestehend aus einem für das zu filternde Medium durchlässigen Material mit aus jeder Faltenwand in Richtung auf eine benachbarte Faltenwand vortretenden, durch Prägung erzeugten inselförmigen Vorsprüngen, die sich in Bewegungsrichtung des Mediums erstrecken und eine ihre Breite übersteigende Länge aufweisen, wobei
die Vorsprünge einander benachbarter Faltenwände zur Abstandssicherung und Aussteifung aneinander anliegen und die aneinander anliegenden Vorsprünge zweier über eine Faltenkante verbundene Faltenwände in Richtung auf die gegenüberliegende Faltenkante in ihrer Höhe zunehmen
somit zwischen diesen Faltenwänden einen in Bewegungsrichtung des Mediums abnehmenden bzw. nach Durchtritt des Mediums durch die betreffende Faltenwand anwachsenden Abstand festlegen,
**gekennzeichnet durch**
mindestens einen den Filtereinsatz (11) **durch** Verbindung jeweils benachbarter Faltenkanten (35) stabilisierenden Faden oder Streifen (39), der
auf Faltenkanten (35) anliegt,
im wesentlichen senkrecht zu den Faltenkanten (35) gerichtet ist und
die Faltenkanten (35) auf dem zu den Faltenkanten senkrechten Weg miteinander verbindet, wobei der Faden (39) jeweils an der Oberfläche anliegend ausgehend von der Faltenkante (35) auf der einen Faltenwand (15 bis 22, 40, 41, 43, 44) bis zu einem Vorsprung (30, 45) dieser Faltenwand (15 bis 22, 40, 41, 43, 44), der an einem Vorsprung (30, 45) der gegenüberliegenden Faltenwandseite anliegt, verläuft und auf der in Richtung der Faltenkante (35) weisenden Fläche (42) der Vorsprünge (30, 45) bis zur benachbarten Faltenwand (15 bis 22, 40, 41, 43, 44) und auf dieser zur nächsten Faltenkante (35) verläuft, und
der den Filtereinsatz (11) stabilisierende Faden (39) derart angeordnet ist, daß er endlos über die Faltenkanten (35) und die den Filtereinsatz (11) nach außen begrenzenden Faltenwände verläuft und dabei insbesondere im Bereich der den Filtereinsatz (11) nach außen begrenzenden Faltenwände als Führung zum Einschieben des Filtereinsatzes (11) in ein Filtergehäuse (12) ausgebildet ist.

2. Filtereinsatz nach Anspruch 1, **dadurch gekennzeichnet, daß** der den Filtereinsatz (11) stabilisierende Faden (39) aus einem schäumenden, klebenden und/oder sich verfestigenden Kunststoff besteht.

3. Filtereinsatz nach einem der vorangehenden Ansprüche, **dadurch gekennzeichnet, daß** die Vorsprünge (30, 45) quer zur Bewegungsrichtung des Mediums eine konstante Breite aufweisen und daß diese Breite geringer ist als die Höhe der maximalen Erhebungen der Vorsprünge (30, 45) - bezogen auf die Ebene der Faltenwand (15 bis 22, 40, 41, 43, 44)-, wobei die Seitenwandungen (300) der Vorsprünge (30, 45) sich im wesentlichen senkrecht zu den die Faltenwände (15 bis 22, 40, 41, 43, 44) miteinander verbindenden Faltenkanten (23 bis 29, 46) erstrecken und und insbesondere die Vorsprünge (30, 45) aussteifende, aushärtbare Beschichtung (38) und/oder Tränkung (38) aufweisen, wobei sich die Beschichtung (38) und/oder Tränkung vorzugsweise auf die Seitenwandungen (300) der Vorsprünge (30, 45) erstreckt.

4. Filtereinsatz nach Anspruch 3, **dadurch gekennzeichnet, daß** die örtliche Dicke der Beschichtung bzw. die Intensität der Tränkung mit dem Abstand der Erhebung der Vorsprünge (30, 45) bezogen auf die Ebene der Faltenwand (15 bis 22, 40, 41, 43, 44) zunimmt und/oder die Beschichtung (38) bzw. Tränkung (38) aus einem Klebstoffmaterial besteht, wobei die einander zugewandten Vorsprünge (30, 45) einander benachbarter Faltenwände (15 bis 22, 40, 41, 43, 44) vorzugsweise miteinander verklebt sind.

5. Filtereinsatz nach einem der vorangehenden Ansprüche, **dadurch gekennzeichnet, daß** die Vorsprünge (30, 45) einander benachbarter Faltenwände (15 bis 22, 40, 41, 43, 44) linienförmig aneinandergrenzen, wobei Klebstoff im Bereich dieser Linien aufgetragen ist.

6. Filtereinsatz nach einem der vorangehenden Ansprüche, **dadurch gekennzeichnet, daß** der Bereich des Übergangs (36) von demjenigen Ende des Vorsprungs (30, 45), das den größten Abstand bezogen auf die Ebene der Faltenwand (15 bis 22, 40, 41, 43, 44) aufweist. in die Ebene der Faltenwand (15 bis 22, 40, 41, 43, 44) derart ausgebildet ist, daß ein Bereich größerer Steigung zwischen Bereichen geringerer Steigung angeordnet ist, wobei insbesondere die Bereiche geringerer Steigung kontinuierlich in angrenzende ebene Bereiche übergehen.

7. Filtereinsatz nach einem der vorangehenden Ansprüche, **dadurch gekennzeichnet, daß** das Klebstoffmaterial auf dem Filtermaterial (10) nur im Bereich der Vorsprünge (30, 45), vorgesehen ist.

8. Filtereinsatz nach einem der vorangehenden Ansprüche, **dadurch gekennzeichnet, daß** das durchlässige Filtermaterial (10) aus einem thermoplastischen Werkstoff bestehende Fasern enthält, welche durch Verschweißung das Material in sich selbst verdichten bzw. aussteifen oder mit entsprechendem Material verbinden und insbesondere nahtförmige Bereiche vorgesehen sind, in denen die Fasern ohne wesentliche Hohlräume miteinander verbunden sind, wobei das durchlässige Filtermaterial (10) insbesondere Fasern, mindestens Faseranteile, aus Polypropylen, Cellulose, Polycarbonat, Polyamid, Teflon und/oder Polyester enthält.

9. Filtereinsatz nach Anspruch 8, **dadurch gekennzeichnet, daß** das durchlässige Filtermaterial (10) mehrlagig ausgebildet ist, wobei einzelne Lagen bereichsweise miteinander verschweißt sind.

10. Filtereinsatz nach einem der Ansprüche 8 oder 9, **dadurch gekennzeichnet, daß** die äußeren Lagen aus thermoplastischem Material bestehen und insbesondere zur Erzeugung der nahtförmigen Bereiche direkt miteinander verschweißt sind und/oder die nahtförmigen verschweißten Bereiche als Filmscharnier ausgebildet sind.

## Claims

1. A filter element of cuboid-shaped construction comprising a multiplicity of pleat walls arranged in zig-zag-shaped pleating for a medium to be filtered passing through the element in the direction from one edge region of the zig-zag pleating in the direction of the opposite edge region of the pleating, comprising a material permeable to the medium to be filtered with island-shaped projecting parts jutting out of each pleat wall in the direction of an adjacent pleat wall and produced by stamping, which extend in the direction of motion of the medium and exhibit a length exceeding their width, in which
the projecting parts of mutually adjacent pleat walls butt against one another for spacing and reinforcement purposes and the mutually abutting projecting parts of two pleat walls connected via a pleat edge increase in their height in the direction of the opposite pleat edge and
thus establish between these pleat walls a distance decreasing in the direction of motion of the medium and increasing after passage of the medium through the pleat wall concerned,
**characterized by**
at least one thread or strip (39) stabilizing the filter element (11) by connection of mutually adjacent pleat edges (35), which thread or strip butts against pleat edges (35),
is directed in the main perpendicular to the pleat edges (35) and
connects the pleat edges (35) with one another on the path perpendicular to the pleat edges, in which the thread (39) resting at any one time against the surface runs, starting from the pleat edge (35) on the one pleat wall (15 to 22, 40, 41, 43, 44), up to a projecting part (30, 45) of said pleat wall (15 to 22, 40, 41, 43, 44), said projecting part (30, 45) resting against a projecting part (30, 45) of the opposite pleat wall side, and runs on the face (42) of the projecting parts (30, 45) which points in the direction of the pleat edge (35) up to the adjacent pleat wall (15 to 22, 40, 41, 43, 44) and on the latter to the next pleat edge (35), and the thread (39) stabilizing the filter element (11) is arranged in such a way that it runs continuously over the pleat edges (35) and the pleat walls bounding the filter element (11) outwardly and at the same time is formed particularly in the region of the pleat walls bounding the filter element (11) outwardly as a guide for introducing the filter element (11) into a filter housing (12).

2. A filter element according to claim 1, **characterized in that** the thread (39) stabilizing the filter element (11) consists of a foaming, sticky and/or solidifying plastics material.

3. A filter element according to any one of the preceding claims, **characterized in that** the projecting parts (30, 45) exhibit obliquely to the direction of motion of the medium a constant width and that this width is less than the height of the maximum elevations of the projecting parts (30, 45) - calculated on the plane of the pleat wall (15 to 22, 40, 41, 43, 44) -, the side walls (300) of the projecting parts (30, 45) extending in the main perpendicular to the pleat edges (23 to 29, 46) connecting the pleat walls (15 to 22, 40, 41, 43, 44) with one another and in particular the projecting parts (30, 45) exhibiting a reinforcing, curable coating (38) and/or impregnation (38), the coating (38) and/or impregnation preferably extending over the side walls (300) of the projecting parts (30, 45).

4. A filter element according to claim 3, **characterized in that** the local thickness of the coating or the intensity of the impregnation increases with the distance of the elevation of the projecting parts (30, 45) calculated on the plane of the pleat wall (15 to 22, 40, 41, 43, 44) and/or the coating (38) or impregnation (38) consists of an adhesive material, the mutually facing projecting parts (30, 45) of mutually adjacent pleat walls (15 to 22, 40, 41, 43, 44) preferably being stuck to one another.

5. A filter element according to any one of the preceding claims, **characterized in that** the projecting parts (30, 45) of mutually adjacent pleat walls (15 to 22, 40, 41, 43, 44) butt against one another in a line shape, adhesive being applied in the region of these lines.

6. A filter element according to any one of the preceding claims, **characterized in that** the region of the passage (36) from that end of the projecting part (30, 45) which exhibits the greatest distance, calculated on the plane of the pleat wall (15 to 22, 40, 41, 43, 44), into the plane of the pleat wall (15 to 22, 40, 41, 43, 44) is formed in such a way that a region of greater increase is arranged between regions of lesser increase, the regions of lesser increase in particular passing continuously into adjacent plane regions.

7. A filter element according to any one of the preceding claims, **characterized in that** the adhesive material is provided on the filter material (10) only in the region of the projecting parts (30, 45).

8. A filter element according to any one of the preceding claims, **characterized in that** the permeable filter material (10) contains fibres consisting of a thermoplastic material, which by welding compress or stiffen the material in itself or connect it with corresponding material and in particular seam-like regions are provided in which the fibres are connected to one another without significant pores, the permeable filter material (10) containing in particular fibres, at least fibre contents, of polypropylene, cellulose, polycarbonate, polyamide, Teflon and/or polyester.

9. A filter element according to claim 8, **characterized in that** the permeable filter material (10) is constructed in a plurality of layers, individual layers being welded to one another to form regions.

10. Filter element according to either one of claims 8 or 9, **characterized in that** the outer layers consist of thermoplastic material and in particular are welded directly to one another to produce the seam-like regions and/or the seam-like welded regions are formed as integral hinges.

## Revendications

1. Cartouche filtrante, de forme parallélépipédique, formée d'une pluralité de parois plissées disposées selon un pliage en zig-zag, pour un fluide à filtrer qui traverse la cartouche en se dirigeant d'une zone d'arêtes du pliage en zig-zag vers la zone d'arêtes opposée du pliage, lesquelles parois sont constituées d'un matériau perméable au fluide à filtrer et pourvu de saillies en forme d'îlots produites par gaufrage et saillant sur chaque paroi plissée en direction d'une paroi plissée voisine, qui s'étendent dans le sens de déplacement du fluide et dont la longueur est supérieure à la largeur,
les saillies de parois plissées voisines étant en appui les unes contre les autres pour assurer l'écartement et pour le raidissement et les saillies, en appui l'une contre l'autre, de deux parois plissées reliées par une arête de pliage ayant une hauteur qui augmente en direction de l'arête de pliage opposée,
et ces parois plissées présentant ainsi entre elles un écartement fixe qui décroît dans la direction de déplacement du fluide resp. croît après le passage du fluide à travers la paroi plissée respective,
**caractérisée par**
au moins un fil ou une bande (39) stabilisant la cartouche filtrante (11) en reliant les arêtes de pliage (35) voisines respectives, qui
est en contact sur les arêtes de pliage (35),
est dirigé(e) de manière sensiblement perpendiculaire aux arêtes de pliage (35) et
relie les unes aux autres les arêtes de pliage (35) sur le trajet perpendiculaire à ces dernières, le fil (39), toujours en contact avec la surface, s'étendant depuis l'arête de pliage (35) sur une des parois plissées (15 à 22, 40, 41, 43, 44) jusqu'à une saillie (30, 45) de cette paroi plissée (15 à 22, 40, 41, 43, 44), qui est en appui contre une saillie (30, 45) du côté de la paroi plissée opposée, et s'étendant, sur la surface (42) des saillies (30, 45) dirigée vers l'arête de pliage (35), jusqu'à la paroi plissée voisine (15 à 22, 40, 41, 43, 44) pour poursuivre, sur celle-ci, vers l'arête de pliage (35) suivante, et
le fil (39) stabilisant la cartouche filtrante (11) étant disposé de manière à s'étendre sans fin sur les arêtes de pliage (35) et sur les parois plissées qui limitent la cartouche filtrante (11) vers l'extérieur et étant exécuté, plus particulièrement dans la région des parois plissées limitant la cartouche filtrante (11) vers l'extérieur, en tant que guide pour introduire la cartouche (11) dans un boîtier (12) de filtre.

2. Cartouche filtrante selon la revendication 1, **caractérisée en ce que** le fil (39) stabilisant la cartouche filtrante (11) est en matière plastique moussante, collante et/ou se solidifiant.

3. Cartouche filtrante selon l'une des revendications précédentes, **caractérisée en ce que** les saillies (30, 45) présentent transversalement à la direction de déplacement du fluide une largeur constante et **en ce que** cette largeur est inférieure à la hauteur des reliefs maximum des saillies (30, 45) - par rapport au plan de la paroi plissée (15 à 22, 40, 41, 43, 44) -, les parois latérales (300) des saillies (30, 45) s'étendant sensiblement perpendiculairement aux arêtes de pliage (23 à 29, 46) reliant les unes aux autres les parois plissées (15 à 22, 40, 41, 43, 44) et présentant en particulier un revêtement (38) et/ou une imprégnation (38) durcissable qui raidit les saillies (30, 45), le revêtement (38) et/ou l'imprégnation s'étendant de préférence sur les parois latérales (300) des saillies (30, 45).

4. Cartouche filtrante selon la revendication 3, **caractérisée en ce que** l'épaisseur locale du revêtement resp. l'intensité de l'imprégnation augmente avec l'écartement du relief des saillies (30, 45) par rapport au plan de la paroi plissée (15 à 22, 40, 41, 43, 44) et/ou **en ce que** le revêtement (38) resp. l'imprégnation (38) est fait(e) d'un matériau collant, les saillies se faisant face (30, 45) des parois plissées voisines les unes des autres (15 à 22, 40, 41, 43, 44) étant de préférence collées les unes aux autres.

5. Cartouche filtrante selon l'une des revendications précédentes, **caractérisée en ce que** les saillies (30, 45) de parois plissées voisines (15 à 22, 40, 41, 43, 44) sont contiguës les unes aux autres en lignes, la colle étant appliquée dans la zone de ces lignes.

6. Cartouche filtrante selon l'une des revendications précédentes, **caractérisée en ce que** la zone de passage (36) de celle des extrémités de la saillie (30, 45) qui présente l'écartement le plus grand par rapport au plan de la paroi plissée (15 à 22, 40, 41, 43, 44) est réalisée de telle manière dans le plan de la paroi plissée (15 à 22, 40, 41, 43, 44) qu'une zone d'inclinaison plus forte est disposée entre des zones d'inclinaison plus faible, les zones d'inclinaison plus faible se transformant en particulier de manière continue en zones contiguës planes.

7. Cartouche filtrante selon l'une des revendications précédentes, **caractérisée en ce que** le matériau collant n'est prévu sur le matériau de filtre (10) que dans la zone des saillies (30, 45).

8. Cartouche filtrante selon l'une des revendications précédentes, **caractérisée en ce que** le matériau de filtre (10) perméable contient des fibres en matériau thermoplastique qui, par soudure, compriment resp. raidissent le matériau en lui-même ou le relient avec un matériau correspondant, et **en ce que** des zones d'assemblage allongées sont en particulier prévues, dans lesquelles les fibres sont reliées les unes aux autres sans cavités notables, le matériau de filtre (10) perméable contenant en particulier des fibres, au moins des parts de fibres en polypropylène, cellulose, polycarbonate, polyamide, Téflon et/ou polyester.

9. Cartouche de filtre selon la revendication 8, **caractérisée en ce que** le matériau de filtre (10) perméable est réalisé en plusieurs couches, les différentes couches étant soudées par zones les unes aux autres.

10. Cartouche filtrante selon l'une des revendications 8 ou 9, **caractérisée en ce que** les couches extérieures sont en matériau thermoplastique et sont soudées directement les unes aux autres en particulier pour former les zones d'assemblage allongées et/ou **en ce que** les zones d'assemblage allongées en forme de soudures sont réalisées comme des charnières à bandes.
